# EUROPEAN PATENT APPLICATION

(11) **EP 2 123 737 A2**
(43) Date of publication of application: **25.11.2009**
(21) Application number: 09006639.0
(22) Date of filing: 16.05.2009
(51) Int. Cl.: C10L 5/44

(54) **Fuel based on vine shoots**

(30) Priority: 23.05.2008 CZ 20080321
(71) Applicant: Výzkumný ústav zemedelské techniky, v.v.i., 161 00 Praha 6 (CZ); Ceská zemedelská univerzita v Praze, 165 21 Praha 6 (CZ)
(72) Inventor: Hutla, Petr, 100 00 Praha 10 (CZ); MazancovÁ, Jana, 198 00 Praha 9 (CZ); Havrland, Bohumil, 252 62 Statenice (CZ); Muzikant, Martin, 149 00 Praha 4 (CZ)
(74) Representative: Walter, Jiri

(57) **Abstract**

The invention concerns to a fuel based on vine shoots, with the content of energy crops, where the most substantive is , that the fuel consists of a mixture containing the basic energy crop in the form of vine shoots, with water content up to 20% of the weight, with weight percentage ranging from 29.99 to 90%, also containing combustible additives with weight percentage ranging from 4.99 to 70%, either selected separately or in combination from the following range: other energy crops, wood and tree bark, coal, vegetal waste, and other secondary raw materials of vegetal origin, with each of the combustible additives used has water content up to 50% of the weight, and also containing non-combustible additives with weight percentage ranging from 0.01 to 20%.

## Description

### Field of the Invention

The invention pertains to the area of solid fuel - fuel based on renewable resources, the renewable resource being plants that are grown, harvested and processed in order to create or compose fuel, which is then used by means of combustion for transformation with the acquisition of thermal energy, which is subsequently used for heating and for the production of hot service water, or plants, or parts thereof, for which there is no other use and the liquidation of which poses a problem.

### Background of the Invention

Use of fuel based on plants is currently known. In addition to wood, there are also some other plants, or parts thereof, used for burning; such plants are often grown for the purpose of burning. Sometimes grass or cereals are burned, in the form of dried matter or straw. Use of these materials is not generally widespread, and they are combusted rather exceptionally and on irregular basis, usually in situations where there is no other way in which these materials can be used at the moment and they become waste material. The problem is that due to the irregularity of supply of these materials it is not worth investing in a processing facility, neither for small-quantity production nor for large-scale production. Such processing facility is usually the pellet press, which presses the above-mentioned materials and produces so-called pellets, i.e., formations in the shape of pills or rolls, which can be stored, transported and used in normal or simply modified boilers or stoves, in a usual and acceptable manner. For the above-mentioned reasons, so-called energy plants started to be grown recently; in this situation, with respect to the intentional growing of a planned volume of such plant, it is also economically realistic to plan an investment in pellet presses. The problem of energy plants, however, either those grown intentionally for combustion or those intended for combustion as otherwise non-utilizable waste, is if they burn with relatively low temperature of cinder melting. This results in sooner and greater obstruction of the grate in the boiler, and the cleaning is very difficult. Another common problem in the pellets produced occurs when they do not have sufficient cohesion, or if they have extensively high abrasive and crumbling wear. For example, it is known that straw-based pellets have generally low cohesion, and so they often fall apart. This can be rectified by other additives or modifications, which, however, results in technological complications or increased production costs. Energy plants include, but are not limited to, hemp, hyson, sorghum, coriander, false flax, sorrel, canary grass, giant knotweed, or, as the case may be, also colza, or colza straw. Beside wood and wood waste, the suitable energy plants seem to be particularly the energy sorrel, canary grass, giant knotweed or colza straw. As far as the giant knotweed is concerned, it is usually not allowed to grow because it is considered an invasive plant. Among energy plants that are intentionally grown for this purpose, the most suitable seems to be the energy sorrel because it provides of the highest yields. For pellet production and the subsequent combustion, however, sorrel has relatively low temperature of cinder melting: 1,160 °C. Also the cohesion of the pellets made of dried energy sorrel is not sufficient. Also from the energy aspect, sorrel is not a raw material, or fuel, as the case may be, with extraordinarily high caloric value. More suitable in terms of energy, i.e., with higher caloric value, seem to be pelletized wood waste materials, for example pellets made of sawdust, chips or bark. Such raw materials, however, are often not available in large quantities; if, then only near wood-processing plants, and sawdust and chips are recently more often processed e.g., for furniture, interior or floor boards. On the other hand, there have also been experiments of adding smaller amounts of energy plants to coal pellets, in order to improve the characteristics of these coal pellets in terms of the structure of the emissions produced in the combustion. Such coal pellets, produced still on coal basis, however, did not address the issue of substantial and more massive involvement of energy plants as a renewable energy source. On the other hand, there have been recently more stalky materials left as waste, or, for example, crop straw or colza straw, and also - in connection with the reduction of sowed agricultural areas - for example for crops - there is now more uncultivated land suitable for growing energy crops.

### Summary of the Invention

The above-mentioned problems are significantly resolved and at the same time technologically and economically effective fuel with favorable storage as well as combustive characteristics is created by a fuel based on vine shoots, with the content of energy crops, according to the invention presented where the substance lies in the fact that the fuel consists of a mixture containing the basic energy crop in the form of vine shoots, with water content up to 20% of the weight, with weight percentage ranging from 29.99 to 90%, also containing combustible additives with weight percentage ranging from 4.99 to 70%, either selected separately or in combination from the following range: other energy crops, wood and tree bark, coal, vegetal waste, and other secondary raw materials of vegetal origin, with each of the combustible additives used has water content up to 50% of the weight, and also containing non-combustible additives with weight percentage ranging from 0.01 to 20%. It is convenient if both the vine shoots and the combustible additives are used in the form of particles with the size ranging from 0.1 to 50 mm. Other secondary raw materials of vegetal origin that can be conveniently used are crop straw and/or colza straw and/or meadow vegetation. What can also be beneficial is if the mixture contains at least one kind of combustible additive with weight percentage of the combustible additive in the mixture ranging from 5 to 15%. At any rate, it would be beneficial if the percentage of vine shoots in the mixture is in the range from 30 to 60% of the weight. Effective combustible additives then may be crop straw and/or meadow vegetation. At any rate, it is beneficial if the mixture is processed in the form of briquettes or pellets with mass density ranging from 0.4 to 1.6 g/cm³. Effective size of pellets is in the range from 0.2 to 20 cm. It is particularly beneficial if the pellets are the size ranging from 0.5 to 6 cm.

This will result in a mixture fuel based on vine shoots as the basic energy plant, making use also of other materials, which, moreover, are often treated as waste and which - when in the mixture with the vine shots - improve on all accounts the cohesion of the material if the fuel is made as pellets. Also the composition of the combustion gases is not worse in the mixture. Quite the opposite, it is improved, as well as the caloric value. These benefits are particularly outstanding in fuel in the form of pellets, although they have shown to a certain extent also in combustion of the above-described materials without pelletization or with lower degree of pressing, which would not technically be described as pelletization. In most cases, the above-described mixtures also have increased temperature of cinder melting, in comparison with the combustion of the main additives, i.e., straw and meadow vegetation, alone, which is beneficial for prevention of obstruction of the grate in stoves or boilers. Also the cost of the fuel, according to the invention presented, will always be favorable because the basis is an energy crop, vine, but cultivated for another purpose, of which the part, which is regularly cut off and otherwise become mere waste, is utilized. The additives are either directly the waste materials or other energy crops with similarly low production costs where, in addition, it is possible to adjust relatively extensively the quantity and types of such additives according to the immediate situation in the market, according to the immediate supply of waste materials, or according to the harvest or surplus of other energy crops. As far as non-energy additives are concerned, they will include non-combustible additives that get in the mixture unintentionally, e.g., earth particles caught on the vegetable material prior to harvest and during harvest and also intentionally added components designed to improve combustion or combustion gases, e.g., similar to those used in the combustion of coal, or also components used to improve the cohesion of the pellets.

### Detailed Description of the Invention

### Example 1 - composition of the fuel in the percentage of weight

| | |
|---|---|
| Vine shoots | 50% |
| Wheat straw | 50% |

### Example 2 - composition of the fuel in the percentage of weight

| | |
|---|---|
| Vine shoots | 45% |
| Rye straw | 55% |

### Example 3 - composition of the fuel in the percentage of weight

| | |
|---|---|
| Vine shoots | 50% |
| Meadow vegetation | 50% |

### Example 4 - composition of the fuel in the percentage of weight

| | |
|---|---|
| Vine shoots | 40% |
| Meadow vegetation | 60% |

### Example 5 - composition of the fuel in the percentage of weight

| | |
|---|---|
| Vine shoots | 40% |
| Meadow vegetation | 30% |
| Wheat straw | 30% |

Presence of non-combustible materials, specifically dust and soil particles, has been detected in all the above-mentioned examples, in the quantity approximately 0.25% of the weight, whereas this presence was not intentional and is not specified in the individual composition examples.

In these examples, the cinder melting temperature was measured, and in comparison with the cinder melting temperature when burning straw or meadow vegetation alone, which is below 900°C, the cinder melting temperature achieved in the combustion of the mixture according to the above-mentioned examples was over 1,100°C. Also, cinder sintering and grate obstruction was not detected.

As far as the composition of the emissions is concerned, it was established that in all the mixtures according to the above-mentioned examples the combustion gases have lower content of CO relative to the combustion gases produced by the combustion of the individual components in the area of additives, i.e., particularly straw, etc. This probably results from the content of vine shoots in the mixture because when burning vine shoots alone the combustion gases have lower content of CO, relative, e.g., to combustion of straw alone. Surprisingly, however, it has been found that the mixture combustion gases have reduced content of CO as opposed to the CO content in the combustion gases resulting from the combustion of vine shoots alone, which seems to improve the characteristics of the fuel even more.

### Industrial Applicability

The invention can be used in the area of acquiring renewable energy resources, and will be used in particular for heating and generation of hot service water. Generation of other types of energy such as mechanical or electrical, however, is not ruled out if a boiler is used with fuel composed according to the invention presented for the generation of steam, which can be subsequently used in a steam engine or turbine to power electric generator or in a co-generation unit based on steam engine or turbine.

## Claims

1. Fuel based on vine shoots, with the content of energy crops, **characterized in, that** the fuel consists of a mixture containing the basic energy crop in the form of vine shoots, with water content up to 20% of the weight, with weight percentage ranging from 29.99 to 90%, also containing combustible additives with weight percentage ranging from 4.99 to 70%, either selected separately or in combination from the following range: other energy crops, wood and tree bark, coal, vegetal waste, and other secondary raw materials of vegetal origin, with each of the combustible additives used has water content up to 50% of the weight, and also containing non-combustible additives with weight percentage ranging from 0.01 to 20%.

2. Fuel based on vine shoots according to claim 1 **characterized in, that** both the vine shoots and the combustible additives are used in the form of particles with the size ranging from 0.1 to 50 mm.

3. Fuel based on vine shoots according to claims 1 and 2 **characterized in, that** other secondary raw materials of vegetal origin for being used are crop straw and/or colza straw and/or meadow vegetation.

4. Fuel based on vine shoots according to claims 1 to 3 **characterized in, that** the mixture contains at least one kind of combustible additive with weight percentage of the combustible additive in the mixture ranging from 5 to 15%.

5. Fuel based on vine shoots according to claims 1 to 4 **characterized in, that** the percentage of vine shoots in the mixture is in the range from 30 to 60% of the weight.

6. Fuel based on vine shoots according to claim 5 **characterized in, that** effective combustible additives for being used are crop straw and/or meadow vegetation.

7. Fuel based on vine shoots according to claims 1 to 6 **characterized in, that** the mixture is processed in the form of briquettes or pellets with mass density ranging from 0.4 to 1.6 g/cm³.

8. Fuel based on vine shoots according to claim 7 **characterized in, that** effective size of pellets is in the range from 0.2 to 20 cm.

9. Fuel based on vine shoots according to claim 8 **characterized in, that** the effective size of the pellets is in the range from 0.5 to 6 cm.
